# EUROPEAN PATENT APPLICATION

(11) **EP 2 574 447 A1**
(43) Date of publication of application: **03.04.2013**
(21) Application number: 11183080.8
(22) Date of filing: 28.09.2011
(51) Int. Cl.: B29C 70/34, B29C 70/70, A63C 5/03

(54) **Recyclable skiboard fabrication method**

(71) Applicant: Chou, Windsor, Taipei City, Taiwan (CN)
(72) Inventor: Chou, Windsor, Taipei City, Taiwan (CN)
(74) Representative: Merrifield, Sarah Elizabeth

(57) **Abstract**

A method for making a recyclable skiboard by preparing a thermoplastic composite sheet material **12** by fusing a glass fiber cloth member **121** and a thermoplastic plastic material, and then putting, in proper order, a steel rim member **13,** an intermediate main board **11,** a plastic rim **14** and top and bottom plastic boards **15** in a cavity **21** of a mold having set therein heating elements **31,** and then putting two thermoplastic composite sheet materials **12** to top and bottom sides of the intermediate main board **11** between the top and bottom plastic boards **15,** and then melting the materials in the cavity **21** of the mold **2;3** at about 80°C∼100°C for about 15∼20 minutes to fuse the supplied materials into the desired recyclable skiboard **1.**

## Description

### BACKGROUND OF THE INVENTION

### 1. Field of the Invention:

The present invention relates to a skiboard fabrication technology and more particularly, to a recycle skiboard fabrication method, which is environmental friendly and practical for making skiboards having high strength and recyclable characteristics.

### 2. Description of the Related Art:

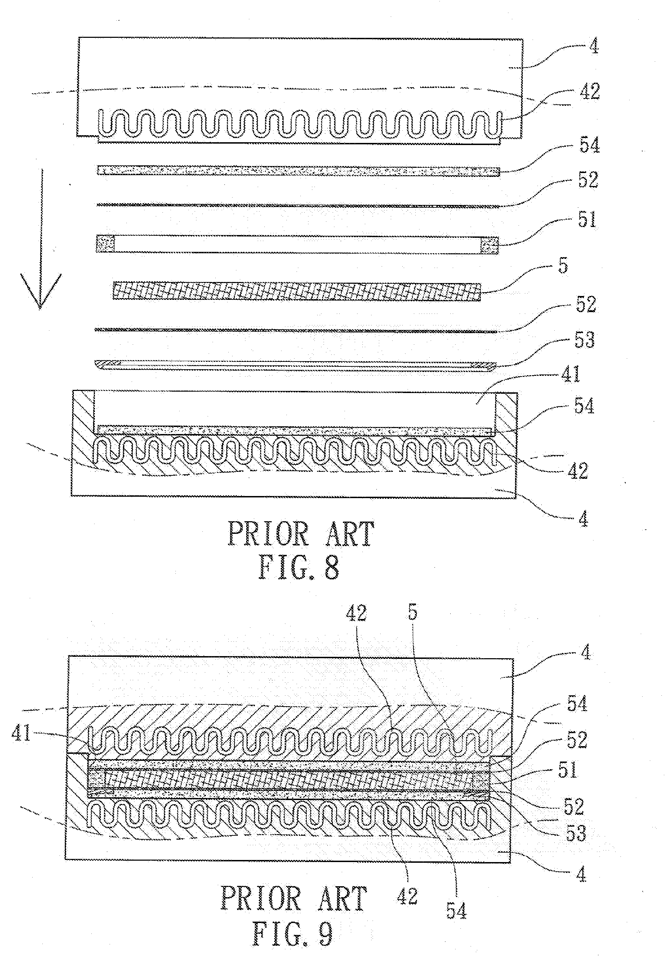

According to a known skiboard fabrication method, as shown in FIGS. 8 and 9, an intermediate main board **5** in a predetermined shape, a plastic rim **51** that is set around the intermediate main board **5,** a steel rim **53,** glass fiber fabric members **52,** each glass fiber fabric member **52** having top and bottom surfaces thereof coated with a layer of epoxy resin or thermosetting polyurethane, and top and bottom plastic boards **54** are put in proper order in the cavity **41** of the mold **4** that has set therein heating elements **42,** and then the mold **4** is closed, and then the heating elements **42** are electrically connected to heat the materials in the cavity **41** of the mold **4,** causing the plastic rim **51,** the glass fiber fabric members **52,** the steel rim **53** and the top and bottom plastic boards **54** to be fused together, forming a skiboard.

The aforesaid conventional skiboard fabrication method pertains to "thermosetting" technology. Before molding, each glass fiber fabric member **52** has its top and bottom surfaces respectively coated with a layer of epoxy resin or thermosetting polyurethane, This skiboard fabrication method is functional, however the finished skiboard is not recyclable. Therefore, the aforesaid conventional skiboard fabrication method is not environmental friendly.

### SUMMARY OF THE INVENTION

The present invention has been accomplished under the circumstances in view. It is one object of the present invention to provide a skiboard fabrication method, which is practical for making skiboards having high strength and recyclable characteristics.

To achieve this and other objects of the present invention, a recyclable skiboard fabrication method includes the steps of: (a) preparing a thermoplastic composite sheet material by fusing a glass fiber cloth member and a thermoplastic plastic material at temperature about 200°C∼250°C for about 30 minutes; (b) putting, in proper order, a steel rim member, an intermediate main board, a plastic rim that is set around the intermediate main board, and top and bottom plastic boards in a cavity of a mold having set therein heating elements, and then putting two thermoplastic composite sheet materials obtained subject to step (a) to top and bottom sides of the intermediate main board between the top and bottom plastic boards; (c) closing the mold and electrically connecting the heating elements in the mold to heat the materials in the cavity of the mold at temperature about 80°C∼100°C for about 15∼20 minutes and to further have the intermediate main board, the thermoplastic composite sheet materials, the steel rim member, the plastic rim and the top and bottom plastic boards be fused into a recyclable skiboard; and (d) removing the finished recyclable skiboard from the mold after cooling.

### BRIEF DESCRIPTION OF THE DRAWINGS

FIG. 1 is an exploded view, illustrating materials prepared for molding in a mold into a recyclable skiboard in accordance with a first embodiment of the present invention.
FIG. 1-1 is an exploded view, illustrating materials prepared for molding in a mold into a recyclable skiboard in accordance with a second embodiment of the present invention.

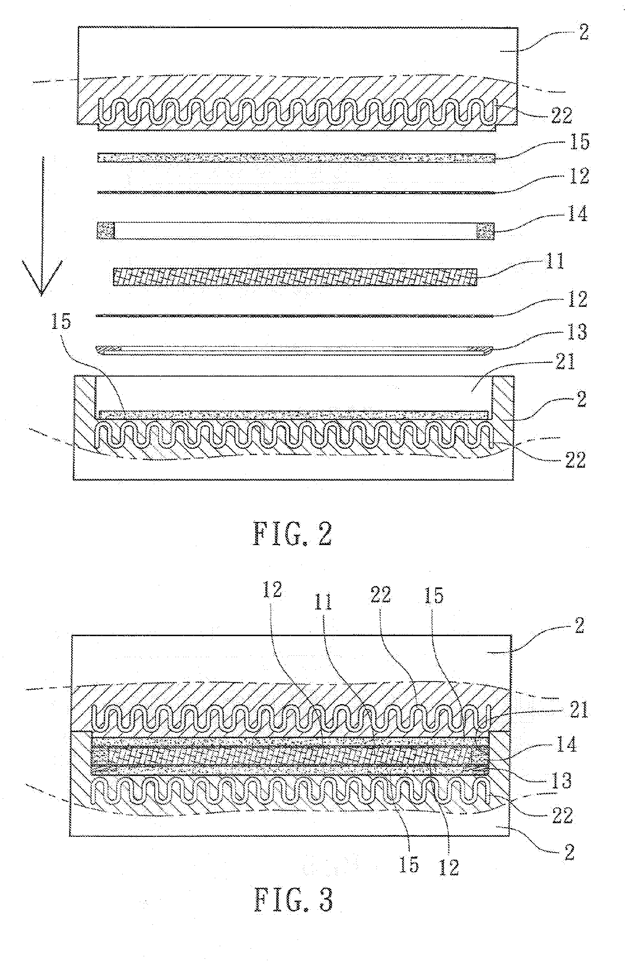

FIG. 2 is a sectional view, illustrating materials prepared for molding in a mold into a recyclable skiboard in accordance with the first embodiment of the present invention.
FIG. 3 corresponds to FIG. 2, illustrating the mold closed.

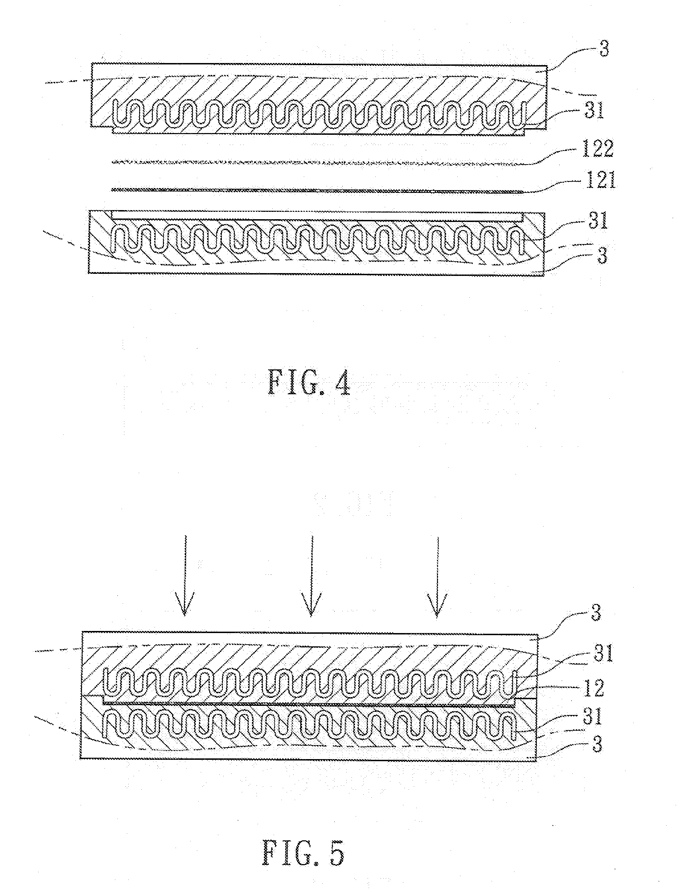

FIG. 4 is an exploded, sectional view of the present invention, illustrating the preparation of a thermoplastic composite sheet material.
FIG. 5 corresponds to FIG. 4, illustrating the mold closed.
FIG. 6 is an exploded, sectional view of the present invention, illustrating an alternate form of the preparation of a thermoplastic composite sheet material.
FIG. 7 illustrates a fabric woven of thermoplastic yarns with glass fiber yarns in accordance with the present invention.
FIG. 8 is an exploded, sectional view, illustrating materials prepared for molding in a mold into a skiboard in accordance according to the prior art.
FIG. 9 corresponds to FIG. 8, illustrating the mold closed.

### DETAILED DESCRIPTION OF THE PREFERRED EMBODIMENT

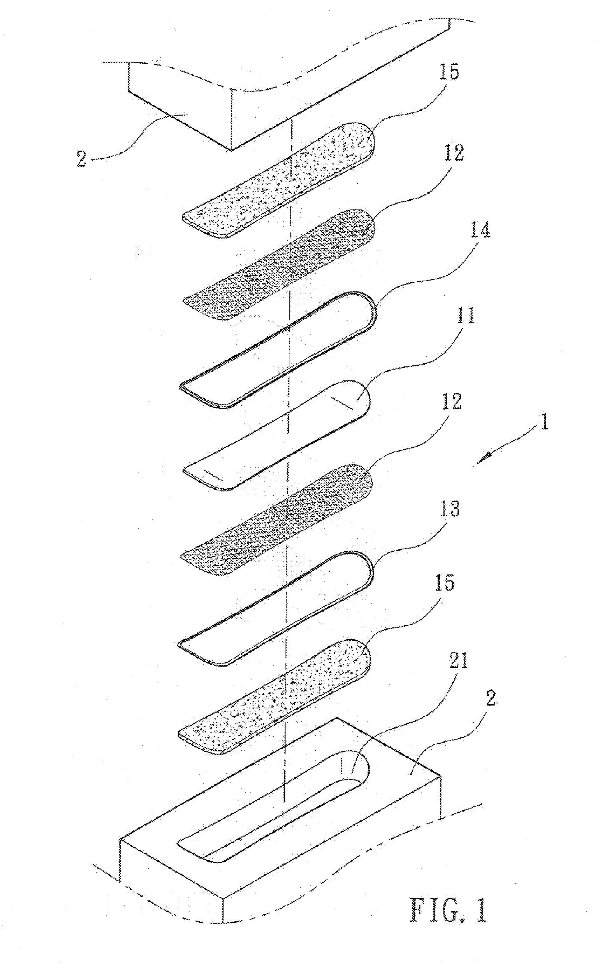

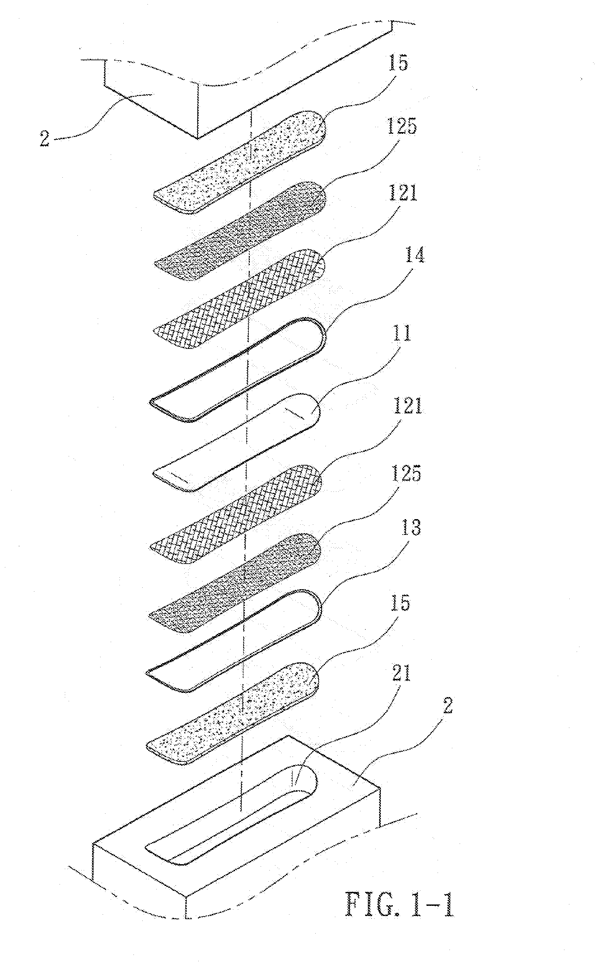

Referring to FiGS. 1∼6, a recyclable skiboard fabrication method in accordance with the present invention includes the steps of:
(a) preparing a thermoplastic composite sheet material **12** having adhesive, high strength and recyclable characteristics by fusing a glass fiber cloth member **121** and a thermoplastic plastic material that can be thermoplastic grains (or resin) **122,** thermoplastic fabric **123** our thermoplastic yarns **124,** by means of a heating elements **31** in a mold **3.** at temperature about 200°C∼250°C for about 30 minutes;
(b) putting, in proper order, a steel rim members **13**, an intermediate main board **11**, a plastic rim **14** that is set around the intermediate main board **11,** and top and bottom plastic boards **15** in the cavity **21** of a mold **2,** and then putting two thermoplastic composite sheet materials **12** obtained subject to step (a) to the top and bottom sides of the intermediate main board **11** between the top and bottom plastic boards **15;**
(c) closing the mold **2** and turning on heating elements **22** in the mold **2** to heat the materials in the cavity **21** of the mold **2** at temperature about 80°C∼100°C for about 15∼20 minutes and to further have the intermediate main board **11**, the thermoplastic composite sheet materials **12,** the steel rim member **13,** the plastic ring **14** and the top and bottom plastic boards **15** be fused into a recyclable skiboard **1;** and
(d) removing the recyclable skiboard **1** from the mold **2** after cooling.

In the aforesaid preparation method, the intermediate main board **11** can be made of wood, metal, environmental friendly plastics or foam plastics.

Further, a rim member made of plastic or plastic fiber may be used to substitute for the steel rim member **13**.

In an alternate form of the present invention, as shown in FIG. 1-1, a steel rim member **13,** an intermediate main board **11,** a plastic rim **14** that is set around the intermediate main board **11,** and top and bottom plastic boards **15** are put in the cavity **21** of a mold **2**, and then two glass fiber cloth members **121** are respectively attached to the top and bottom sides of the intermediate main board **11** between the top and bottom plastic boards **15,** and then two, thermoplastic plastic boards **125** are respectively put in between the glass fiber cloth members **121** and the top and bottom plastic boards **15,** and the heating elements **22** in the mold **2** are electrically connected to heat the materials in the cavity **21** of the mold **2,** enabling the supplied materials to be fused into a recyclable skiboard **1** or snowboard. Further, if the intermediate main board **11** is made of an environmentally friendly material or foamed plastics, the finished product of the recyclable skiboard **1** can be semitransparent that admits light.

Further, the thermoplastic grains (or resin) **122,** the thermoplastic fabric **123** and the thermoplastic yarns **124** can be selected from the material group of polyethylene (PE), polypropylene (PP), polystyrene (PS), acrylonitrile butadiene styrene (ABS), polyethylene terephthalate (PET), acrylic, thermoplastic polyurethane and nylon.

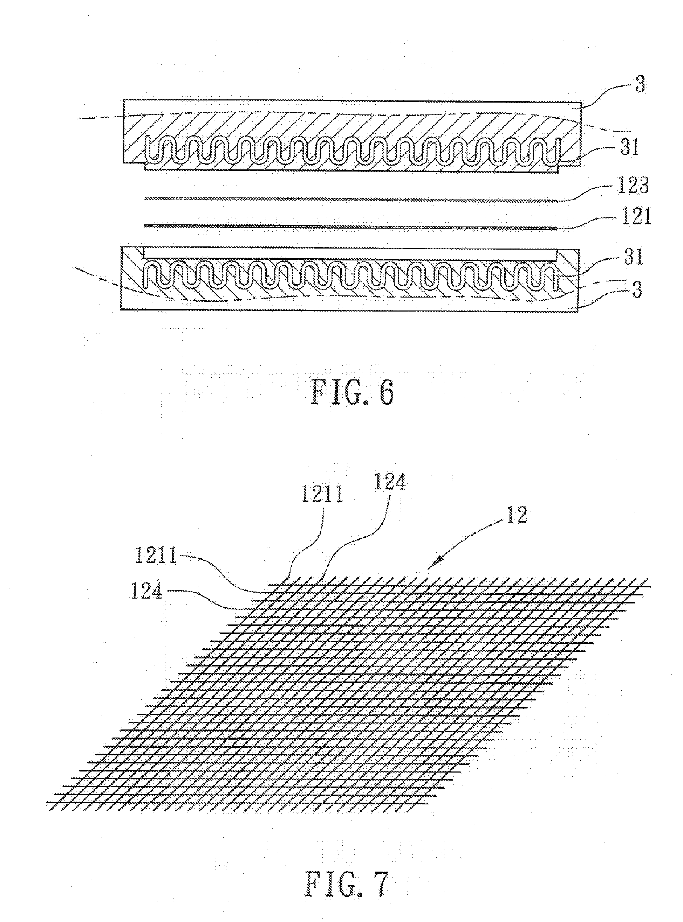

Further, the thermoplastic composite sheet material **12** can be prepared by: weaving thermoplastic yarns **124** with glass fiber yarns **1211** into a fabric and then heating the fabric thus obtained by a heating elements **31** in a mold **3** to have the thermoplastic yarns **124** and the glass fiber yarns **1211** be fused together (see FIG. 7). Alternatively, the thermoplastic composite sheet material **12** can be made by fusing a glass fiber cloth member **121** and a thermoplastic plastic material, or mixing a thermoplastic plastic material and a molten glass fiber.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A recyclable skiboard fabrication method, comprising the steps of:
(a) preparing a thermoplastic composite sheet material by fusing a glass fiber cloth member and a thermoplastic plastic material at temperature about 200°C∼250°C for about 30 minutes;
(b) putting, in proper order, a steel rim members, an intermediate main board, a plastic rim that is set around said intermediate main board, and top and bottom plastic boards in a cavity of a mold having set therein heating elements, and then putting two thermoplastic composite sheet materials obtained subject to step (a) to top and bottom sides of said intermediate main board between said top and bottom plastic boards;
(c) closing said mold and electrically connecting said heating elements in said mold to heat the materials in said cavity of said mold at temperature about 80°C∼100°C for about 15∼20 minutes and to further have said intermediate main board, said thermoplastic composite sheet materials, said steel rim member, said plastic rim and said top and bottom plastic boards be fused into a recyclable skiboard; and
(d) removing the finished recyclable skiboard from said mold after cooling,

2. The recyclable skiboard fabrication method as claimed in claim 1, wherein said intermediate main board is made of wood.

3. The recyclable skiboard fabrication method as claimed in claim 1, wherein said intermediate main board is made of metal.

4. The recyclable skiboard fabrication method as claimed in claim 1, wherein said intermediate main board is made of one of the material group of environmental friendly plastics and foam plastics.

5. The recyclable skiboard fabrication method as claimed in claim 1, wherein said thermoplastic composite sheet material is prepared by fusing a glass fiber cloth member and a thermoplastic grains (or resin).

6. The recyclable skiboard fabrication method as claimed in claim 1, wherein said thermoplastic composite sheet material is prepared by fusing a glass fiber cloth member and thermoplastic yarns.

7. The recyclable skiboard fabrication method as claimed in claim 1, wherein said thermoplastic composite sheet material is prepared by: weaving thermoplastic yarns with glass fiber yarns into a fabric and then heating the fabric thus obtained by a heating elements in a mold to have said thermoplastic yarns and said glass fiber yarns be fused together.

8. The recyclable skiboard fabrication method as claimed in claim 1, wherein said thermoplastic composite sheet material is prepared by: fusing a glass fiber cloth member and a thermoplastic plastic material.

9. The recyclable skiboard fabrication method as claimed in claim 1, wherein said thermoplastic composite sheet material is prepared by: mixing a thermoplastic plastic material and a molten glass fiber.

10. The recyclable skiboard fabrication method as claimed in claim 1, wherein said thermoplastic plastic material is selected from the material group of polyethylene (PE), polypropylene (PP), polystyrene (PS), acrylonitrile butadiene styrene (ABS), polyethylene terephthalate (PET), acrylic, thermoplastic polyurethane and nylon.

11. The recyclable skiboard fabrication method as claimed in claim 1, wherein a rim member made of plastic or plastic fiber is usable to substitute for said steel rim member.

12. A recyclable skiboard fabrication method, comprising the steps of:
(a) putting a steel rim member, an intermediate main board, a plastic rim that is set around said intermediate main board, and top and bottom plastic boards in a cavity of a mold having set therein heating elements, and then putting two glass fiber cloth members to top and bottom sides of said intermediate main board between said top and bottom plastic boards, and then putting two thermoplastic plastic boards in between said glass fiber cloth members and said top and bottom plastic boards;
(b) electrically connecting said heating elements of said mold to heat the materials in said cavity of said mold, for enabling the supplied materials to be fused into a recyclable skiboard; and
(c) removing the finished recyclable skiboard from said mold after cooling.
